Europäisches Patentamt

European Patent Office

Office européen des brevets

(11) Publication number: **0 107 443**
**B1**

# EUROPEAN PATENT SPECIFICATION

(45) Date of publication of patent specification: **04.10.89**

(51) Int. Cl.⁴: **G 11 B 5/127**

(21) Application number: **83306171.6**

(22) Date of filing: **12.10.83**

(54) Magnetic recording and reproducing thin film head.

(30) Priority: **15.10.82 JP 179854/82**

(43) Date of publication of application:
**02.05.84 Bulletin 84/18**

(45) Publication of the grant of the patent:
**04.10.89 Bulletin 89/40**

(84) Designated Contracting States:
**DE FR GB NL**

(56) References cited:
EP-A-0 071 489
FR-A-2 428 886
GB-A-2 092 807
US-A-3 344 237

PATENTS ABSTRACTS OF JAPAN, vol. 6, no.
62 (P-111)940r, 21st April 1982; & JP - A - 57
3213 (TOPPAN INSATSU K.K.) 08-01-1982

PATENTS ABSTRACTS OF JAPAN, vol. 4, no.
31 (P-2)513r, 18th March 1980; & JP - A - 55
4730 (FUJITSU K.K.) 14-01-1980

(73) Proprietor: **HITACHI, LTD.**
**6, Kanda Surugadai 4-chome Chiyoda-ku**
**Tokyo (JP)**

(72) Inventor: **Nakamura, Hitoshi**
**3-24-19, Higashi-ohme**
**Ohme-shi Tokyo (JP)**
Inventor: **Shiiki, Kazuo**
**2644-6, Kawashiri Shiroyama-machi**
**Tsukui-gun Kanagawa-ken (JP)**
Inventor: **Yuito, Isamu**
**2-11-12, Toorimachi**
**Sendai-shi Miyagi-ken (JP)**
Inventor: **Shiroishi, Yoshiro**
**2-32-A101, Koyasu-cho**
**Hachioji-shi Tokyo (JP)**
Inventor: **Fujiwara, Hideo**
**1272-5-118, Shimotomi**
**Tokorozawa Saitama-ken (JP)**
Inventor: **Shinagawa, Kiminari**
**3603-2, Kawashiri Shiroyama-machi**
**Tsukui-gun Kanagawa-ken (JP)**
Inventor: **Iijima, Akemi**
**2727, Uenohara Uenohara-cho**
**Kitatsuru-gun Yamanashi-ken (JP)**

# EP 0 107 443 B1

(56) References cited:

PATENTS ABSTRACTS OF JAPAN, vol. 4, no. 115 (P-23)597r, 16th August 1980, page 112 P 23; & JP - A - 55 70 933 (FUJITSU K.K.)28-05-1980

PATENTS ABSTRACTS OF JAPAN, vol. 3, no. 70 (E-117), 16th June 1979, page 24 E 117; & JP - A - 54 47 619 (TOKYO SHIBAURA DENKI K.K.) 14-04-1979

PATENTS ABSTRACTS OF JAPAN, vol. 5, no. 21 (P-48)693r, 7th February 1981; & JP - A - 55 150 116 (FUJITSU K.K.) 21-11-1980

PATENTS ABSTRACTS OF JAPAN, vol. 6, no. 145 (P-132)1023r, 4th August 1982; & JP - A - 57 66 522 (HITACHI SEISAKUSHO K.K.) 22-04-1982

(74) Representative: Calderbank, Thomas Roger et al
MEWBURN ELLIS & CO. 2/3 Cursitor Street
London EC4A 1BQ (GB)

## Description

The present invention relates to a magnetic recording and reproducing thin film head.

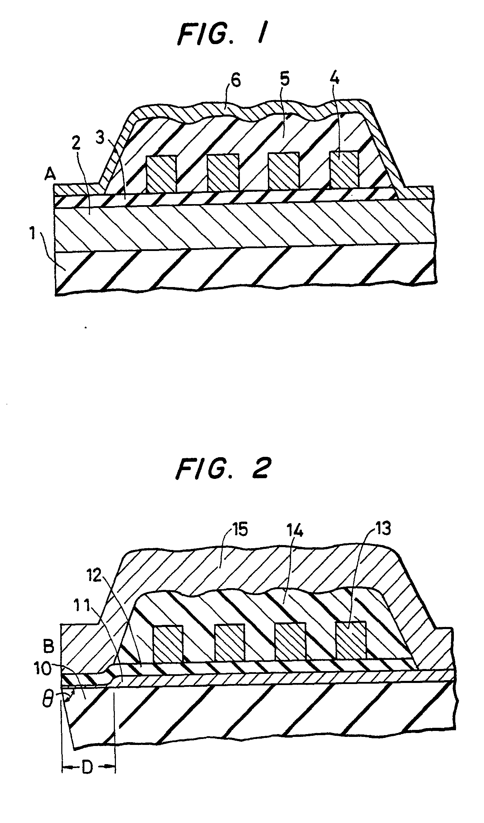

Many structures for a magnetic recording and reproducing thin film head have been proposed. Figure 1 of the accompanying drawings shows one example of such a head. In that Figure, a lower magnetic layer 2 is formed on a nonmagnetic substrate 1. An inorganic insulator layer 3 effects electrical insulation between the lower magnetic layer 2 and a conductor coil 4, and an organic insulator 5 layer effects electrical insulation between the conductor coil 4 and an upper magnetic layer 6 formed of a magnetic film of high permeability. It is required that one magnetic layer of a magnetic recording head be very thin to form a main magnetic pole for executing recording and reproduction, while the other magnetic layer very thick to form an auxiliary magnetic pole for forming a closed magnetic path (see, for example, Japanese Laid-open Patent Application No. 52—82318). In such prior art the lower magnetic layer is thickened and forms the auxiliary magnetic pole. It is also known to form the substrate of a magnetic substrate such as Mn—Zn ferrite so that the substrate functions both as the lower magnetic layer and as a substrate (see, for example, Japanese Laid-open Utility Model Registration Application No. 57—75617).

Thus in a conventional perpendicular magnetic recording thin film head:

(i) The lower magnetic layer serves as the auxiliary magnetic pole for forming a closed magnetic path and is considerably thicker than the upper magnetic layer. Usually the lower magnetic layer is not patterned;

(ii) The upper magnetic layer serves as the main magnetic pole for executing reoording and reproduction. The upper magnetic layer is patterned into a suitable shape in order to form recording and reproducing tracks; and

(iii) In order to decrease the recording current of the conductor coil, it is usual to wind the coil spirally (such a coil being called a "multi-turn coil").

With a thin film head of such a structure, it is difficult to achieve a main magnetic pole with good magnetic characteristics. The reasons for this are that the upper magnetic layer forms a high step pattern (ordinarily, a step of approximately 10 μm), so the magnetic characteristics are liable to degrade at the step part, and that due to the multi-turning of the coil intended to enhance the current efficiency, an undulation (small unevenness) corresponding to the coil pattern may appear in the upper magnetic layer, so the magnetic characteristics degrade. Another disadvantage is that high dimensional accuracy of the main magnetic pole is not achieved either when the high step is patterned by etching or when the pattern is formed by a process such as sputtering with a mask. Particularly when the upper magnetic layer is thick, accurate patterning is impossible to achieve or practice. It is therefore difficult to thicken any part other than part A (shown in Figure 1) concerned in the recording and reproduction and which faces a magnetic recording medium, which would have the effect of reducing the magnetic reluctance and raising the efficiency of the head.

The present invention seeks to overcome the problem of degradation of magnetic characteristics inherent in the prior art thin film head by providing a magnetic recording and reproducing thin film head having a non-magnetic substrate, a lower magnetic layer on the substrate, a first insulation layer on the lower magnetic layer, a second insulation layer on the first insulation layer, and an upper magnetic layer, a first part of the upper magnetic layer being formed on the second insulation layer, a second part of the upper magnetic layer contacting the first insulation layer, and a third part of the upper magnetic layer contacting the lower magnetic layer, there being at least one conductor encapsulated within the first and/or second insulation layers; characterised in that:

the lower magnetic layer is adapted to form a main magnetic pole, and the upper magnetic layer is adapted to form an auxiliary magnetic pole, the lower magnetic layer having a first part adjacent the magnetic recording medium in use, with a thickness between 0.1 μm and 1 μm and a width in the direction perpendicular to the magnetic recording medium between 2 μm and 5 μm, and a second part with a thickness between 1 μm and 6 μm. The inventors of the present invention have appreciated that since the main magnetic pole determining the head performance is the upper magnetic layer in the prior art, it is the defects of the layer which are primarily responsible for the degradation of magnetic characteristics of the head. FR—A—2,428,886 shows a head having a lower magnetic layer on a substrate, and an upper magnetic layer, separated (at least in part) from the lower magnetic layer by insulation. The lower magnetic layer forms a main magnetic pole, and the upper layer forms an auxiliary magnetic pole, although otherwise the structure of the head of FR—A—2,428,886 is different from that of the head of the present invention. No advantageous dimensions of the layers are disclosed.

It is also known from JP—A—54—47019 to use a protective metal plate to mitigate abrasion of the head in use. The present invention thus makes possible a thin film head which has a high recording density, high recording and reproduction efficiency, and excellent magnetic characteristics, and which is relatively easy to manufacture.

In the magnetic recording and reproducing thin film head of the present invention, the lower magnetic layer formed on the nonmagnetic substrate serves as the main magnetic pole. Therefore, in order to prevent a gap (which would degrade the characteristics of the device) from arising between the magnetic recording medium and the main magnetic pole during operation, the angle θ which the surface of the substrate facing the recording medium defines to the upper surface of the substrate, which has the lower magnetic layer thereon, should preferably be 60° to 87°, more preferably 80° to 85°, not 90°. However, even when the angle is 90°, as in the prior art, the effects of the present invention may be obtained.

The upper magnetic layer of a thin film head according to the present invention can be formed by a process such as sputtering with a mask, evaporation with a mask or plating, and it need not undergo etching on step. Of course, the pattern of the upper magnetic layer may be formed via photoetching a step, as in the prior art, if desired. However, since the upper magnetic layer is the auxiliary magnetic pole, it is thick, and formation by etching is often difficult.

The material for the upper magnetic layer and the lower magnetic layer may be those used in prior art heads. Preferably materials of high permeability which can be formed into thin films, for example, permalloys (Ni-Fe alloys) and amorphous magnetic alloys of high permeability (Co-Cr-Zr alloys etc.) are used. In particular, a material of high saturation flux density is desirable for the upper magnetic layer serving as the main magnetic pole.

An embodiment of the present invention will now be described in detail, by way of example, with reference to the accompanying drawings, in which:

Figure 1 is a sectional view through a prior art perpendicular magnetic recording and reproducing thin film head;

Figure 2 is a sectional view of a perpendicular magnetic recording and reproducing thin film head being an embodiment of the present invention; and

Figure 3 is a perspective view from above of a prior art magnetic recording and reproducing thin film head.

Referring to Figure 2, a vertical section through the principal portions of an embodiment of a magnetic perpendicular magnetic recording and reproducing thin film head according to the present invention shows, a nonmagnetic substrate 10 made, for example, of "Photoceram" (trade name of Corning Glass Works) which was 40 mm in diameter and 1 mm in thickness. It is also possible to use a non-magnetic substrate made of "7059 Glass" (trade name of Corning Glass Works) of ceramics such as $Al_2O_3$ or $Al_2O_3$-Tic. A lower magnetic layer 11 is formed by a sputtering process with a target having a composition of 77.5 wt% Ni — 22.5 wt% Fe on the substrate. In the embodiment, the thickness of the lower magnetic layer 11 in the vicinity of a part B facing to a magnetic recording medium was 0.5 μm, and the thickness thereof on a rear core side was 3 μm. It is a feature of the invention that the thickness of the lower magnetic layer in the vicinity of the face is 0.1 to 1 μm and the thickness of the rear core is 1 to 6 μm. It is also possible to simplify the manufacturing process by making the rear core and the face to be approximately equal in thickness, although this causes some reduction in efficiency. The length D of the thin part of the lower magnetic layer in the vicinity of the face is 2 to 5 μm, and in the embodiment it was made 2 μm thick. An insulator layer 12 serves for electrical insulation between the lower magnetic layer 11 and the conductor coil 13. In the embodiment, $SiO_2$ was deposited to a thickness of 3 μm by a sputtering process. Aluminium (Al) was deposited by evaporation process to form the conductor coil 13. In the embodiment the coil 13 was a spiral type multiple-wound coil of four turns whose conductor section was 4 μm wide and 6 μm high. An organic insulator layer 14 of a polyimide resin or the like was used for electrical insulation between the conductor coil 13 and an upper magnetic layer 15. The organic insulator layer 14 is also flattened the upper surface of the 4-turn multiple coil. In the embodiment, "PIQ" (trade name of Hitachi Kasei Kabushiki Kaisha) which is a polyimide isoindro quinazolinedione resin, was used to form the layer 14. The thickness of the PIQ layer 14 as measured from the upper surface of the insulator layer 12 was 6 μm. The step of flattening the surface above the coil by utilizing the viscosity of PIQ is already known. In the prior-art magnetic head, the insulator layer needs to be as flat as possible in order to prevent degradation of the magnetic characteristics of the upper magnetic layer, being the main magnetic pole. In contrast, in the embodiment of a magnetic head according to the present invention, the insulator layer 14 need not be very flat because a thick auxiliary magnetic pole is formed thereon. The insulator may, therefore, be made of an inorganic insulator such as $SiO_2$ rather than an organic substrate. In the above head producing process, patterning was carried out by the use of a photolithograph technique. Such techniques and the structure of parts of the head according to the present invention other than the principal portions are the same as in the prior art, and further description is not given here. An amorphous alloy composed of 76 at% Co — 12 at% Cr — 12 at%. Zr was formed to a thickness of about 20 μm by a sputtering process to form an upper magnetic layer 15. In order to form the magnetic layer 15 in a desired shape, a mask was placed over the head during the sputtering so as to deposit the magnetic substance on only the desired parts of the head. This is a technique which is usually known as a mask sputtering process. In general, with mask sputtering a magnetic substance turns round through the clearance between a mask and a specimen and is deposited on the specimen, and registration of a pattern with another pattern formed is difficult, so precision is not high. In contrast, in the present invention, the upper magnetic layer serves as the auxiliary magnetic pole, which pole merely forms a closed magnetic path, and hence, its purpose can be achieved satisfactorily. Since etching etc. for forming a pattern are not performed, the upper magnetic layer 15 may be a thick film. If the magnetic head is to have suitable characteristics it is desirable for the thickness of the upper magnetic layer to be 5 to 40 μm.

For the same purpose, it is also possible to employ fabricating expedients such as evaporation with a mask and plating.

The construction and function of the thin film head according to the present invention differ from those of the prior-art thin film head in the following points:

(1) The lower magnetic layer which forms the main magnetic pole and is usually made of the magnetic film of high permeability;

(2) The lower magnetic layer which is formed on the flat substrate has excellent magnetic characteristics and has good reproducibility, and it has excellent dimensional accuracy because it is easy to form a pattern on it so that it forms a superior main magnetic pole. It is the main magnetic pole that determines the magnetic characteristics of the head.

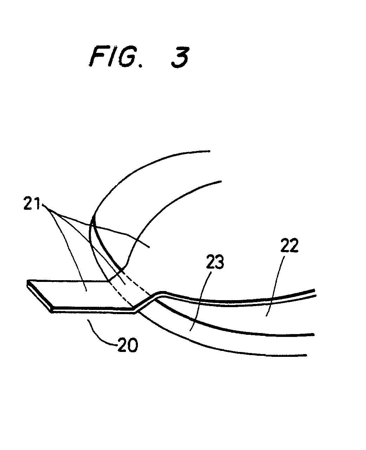

Figure 3 shows a perspective view of a prior art thin film head. The figure shows a lower magnetic layer 15, an upper magnetic layer 21 which serves as the main magnetic pole, an organic insulator layer 22 which covers a coil pattern, and a step part 23 which is formed by part of the organic insulator layer. In Figure 3, illustration of the shape of the lower magnetic layer 20 is omitted. The prior art thin film head involves the disadvantage that, since the upper magnetic layer is used as the main magnetic pole for recording and reproduction, patterning which includes the high step part 23 as shown in Figure 3 is needed, so the dimensional accuracy is inferior. According to the thin film head of the present invention, the main magnetic pole is the lower magnetic layer and is patterned on the flat substrate, so that the dimensional accuracy is enhanced to improve the available percentage in mass production.

The head of the present invention may be finished by machining steps such as cutting, lathing and lapping after the proper patterns of the respective layers have been formed on the substrate. Since such steps are known processes, further description is not given here. The section of the principal portions shown in Figure 2 corresponds to the final head which has undergone machining steps. The surface of the substrate facing the recording medium preferably does not form a right-angle with the surface of the substrate formed with the patterns thereon. The reason for this is to improve the contact between the recording medium and the main magnetic pole and to bring them as close as possible. In the present invention in which the main magnetic pole lies directly on the substrate 10, the surface of the substrate facing the recording medium should desirably be in a shape retreating from the plane of the recording medium. In the embodiment described above, the angle θ was 84°. Such angling can be readily achieved by lapping the surface obliquely.

The recording and reproducing characteristics of the head of the embodiment of the present invention were measured by the use of a magnetic recording medium in which a perpendicular magnetic film of a Co-Cr alloy layer was formed on an Ni-Fe alloy layer. The optimized recording current was approximately 30 mA at a recording density of 10 KBPI, and this was about 1/3 of the value of the prior-art head shown in Figure 1. The reproduction output at 1 KBPI was approximately 0.24 $mV_{p-p}$, which was about 1.5 times that of the prior-art head.

The prior-art head of Figure 1 used for the comparisons was substantially the same in construction as the head of the present embodiment, except that the lower magnetic layer 2 which was made of Mn-Zn ferrite and which was 1,000 μm thick was used as the auxiliary magnetic pole and that the upper magnetic layer 6 (0.5 μm thick) whose side faeing to the recording medium was not thinned was used as the main magnetic pole.

In the embodiment of the present invention, Ni-Fe alloy was used as the material of the main magnetic pole. The saturation flux density of this material is about 10 kG. It is preferable to select a material having the highest possible saturation flux density in order to prevent magnetic saturation developing in the main magnetic pole for executing the recording, particularly in the part near to the recording medium. When an Fe — 6.5 wt% Si — 1 wt% Ru alloy having a saturation flux density of about 18 kG was formed by the sputtering process and used as the material of the main magnetic pole, enhancement in the reproduction output amounting to about 1.5 times was noted in comparison with use of the Ni-Fe alloy.

In general, alloys containing Fe and Si as principal ingredients, which are doped with an element such as Ru, Ti or Cr at 0.5 — 2 wt%, exhibit high saturation flux densities. It is therefore desirable to employ any of these alloys as the material of the main magnetic pole in the head of the present invention. The material of the main magnetic pole, however, need not be restricted to these alloys. When the temperature of the substrate during the sputtering is low, these alloys come to have unfavourable magnetic characteristics such as a low permeability and a large coercive force. It is accordingly necessary to set the substrate temperature at approximately 350°C to 400°C. In the prior-art head, the material of the main magnetic pole must be formed on an organic insulator, such as a polyimide resin, used for flattening the surface. At a temperature of about 350°C, however, PIQ resin reacts, upon contact with the Fe-Si alloy and decomposes and formation of the material of the main magnetic pole is difficult.

In the prior art, therefore, when a Fe-Si alloy is used as the main material of the main magnetic pole, the magnetic characteristics are sacrificed, or alternatively, an intermediate film of $Al_2O_2$ or the like needs to be interposed, adding an additional manufacturing step to prevent polyimide resin or the like organic insulator and the Fe-Si alloy coming into direct contact. Since, in the present invention, the main magnetic pole, is formed on the substrate 10 of glass or the like, no problem is created by setting the substrate temperature at about 350°C.

In addition to Fe-Si alloy, materials of high saturation flux density include alloys which contain principally Fe and Ti. For example, an Fe — 8 wt% Ti alloy has a saturation flux density of 15 kG, and is preferable to a Ni-Fe alloy as the material of the main magnetic pole. Moreover, such alloys sometimes have their magnetic characteristics enhanced more by putting them into stacked structures with $SiO_2$ etc. in hitherto-known fashion. This can also be applied to the present invention.

In the embodiment of the present embodiment, described above a Co-Cr-Zr amorphous alloy was used as the material of the auxiliary magnetic pole. The reason for this is that, since the alloy can form a film of good magnetic characteristics even at a low substrate temperature during sputtering, it is readily formed on the organic insulator 14 such as polyimide resin or polyimide isoindro quinazolinedione resin. In addition, when a crystalline alloy such as a Ni-Fe alloy or a Fe-Si alloy forms a thick film thicker than about 10 μm, it is liable to peel away from the substrate 10. Also in this respect, amorphous alloy as mentioned above is more convenient. In the present invention, the film is serving as the auxiliary magnetic pole desirably has a sufficient thickness and a satisfactory adhesion, and amorphous alloy material is the most suitable therefor. Amorphous alloys suited to the present invention include Co-Cr-Zr-based alloys such as $Co_{74}Cr_{13}Zr_{13}$ and $Co_{78}Cr_{11}Zr_{11}$, Co-Mo-Zr-based alloys such as $Co_{77}Mo_{13}Zr_{10}$, and further, Co-V-Zr-based alloys, Co-Nb-Zr-based alloys, Co-W-Zr-based alloys, Co-Ti-based alloys, etc. Numerals in the composition formulas indicate atomic %. If the head is to be used in a high frequency band, more favourable results are obtained when any of the amorphous alloys is put into a stacked structure with an insulator such as $SiO_2$ or $Al_2O_3$.

According to the present invention, a lower magnetic layer 11 is used as a main magnetic pole and an upper magnetic layer 15 as an auxiliary magnetic pole, whereby a magnetic recording and reproducing thin film head having good magnetic characteristics is provided. When the thin film head according to the present invention is compared with a prior-art thin film head employing an upper magnetic layer 6 as a main magnetic pole, the recording current efficiency is enhanced by more than 30 %. The manufacturing process of the head of the present invention is easier than the one in use in the prior art and patterning at a high step, causing problems in the process of the prior art is not necessary. Consequently, the precision of pattern dimensions may be improved. Precision of ±10% in the process of the prior art may be improved to ±3% in the present invention.

## Claims

1. A magnetic recording and reproducing thin film head having a non-magnetic substrate (10), a lower magnetic layer (11) on the substrate (10), a first insulation layer (12) on the lower magnetic layer (11), a second insulation layer (14) on the first insulation layer (12), and an upper magnetic layer (15), a first part of the upper magnetic layer being formed on the second insulation layer (14), a second part of the upper magnetic layer (15) contacting the first insulation layer (12), and a third part of the upper magnetic layer (15) contacting the lower magnetic layer (11), there being at least one conductor (13) encapsulated within the first and/or second insulation layers (12, 14); characterised in that: the lower magnetic layer (11) is adapted to form a main magnetic pole, and the upper magnetic layer (15) is adapted to form an auxiliary magnetic pole, the lower magnetic layer (11) having a first part adjacent the magnetic recording medium in use, with a thickness between 0.1 μm and 1 μm and a width in the direction perpendicular to the magnetic recording medium between 2 μm and 5 μm, and a second part with a thickness between 1 μm and 6 μm.

2. A head according to claim 1, wherein the angle between a surface of the substrate (10) which, in use, faces a magnetic recording medium and the surface of the substrate carrying the lower magnetic layer (11) is less than 90°.

3. A head according to any one of the preceding claims, wherein the upper magnetic layer (15) has a thickness between 5 μm and 40 μm.

4. A perpendicular magnetic recording and reproducing thin film head according to any one of the preceding claims, wherein at least a part of the lower magnetic layer (11) is either of a magnetic alloy which contains Fe and Si as its principal ingredients or an alloy which contains Fe and Ti as its principal ingredients.

5. A head according to any one of the preceding claims, wherein at least a part of the upper magnetic layer is an amorphous magnetic alloy.

6. A head according to any one of the preceding claims, wherein the second insulator layer is made of an inorganic insulator.

7. A head according to any one of claims 1 to 5, wherein the second insulator layer is made of an organic insulator.

8. A head according to claim 7, wherein the organic insulator is a polyimide type resin.

## Patentansprüche

1. Dünnfilm-Magnetkopf für Aufzeichnung und Wiedergabe mit einem nicht-magnetischen Substrat (10), einer unteren magnetischen Schicht (11) auf dem Substrat (10), einer ersten Isolierschicht (12) auf der unteren magnetischen Schicht (11), einer zweiten Isolierschicht (14) auf der ersten Isolierschicht (12) und einer oberen magnetischen Schicht (15), wobei ein erster Teil der oberen magnetischen Schicht auf der zweiten Isolierschicht (14) gebildet ist, ein zweiter Teil der oberen magnetischen Schicht (15) die erste Isolierschicht (12) kontaktiert und ein dritter Teil der oberen magnetischen Schicht (15) die untere magnetische Schicht (11) kontaktiert, wobei zumindest ein Leiter in der ersten und/oder zweiten Isolierschicht (12, 14) verkapselt ist; dadurch gekennzeichnet,

daß die untere magnetische Schicht (11) dafür ausgelegt ist, einen Hauptmagnetpol zu bilden, und daß die obere magnetische Schicht (15) dafür ausgelegt ist, einen Hilfsmagnetpol zu bilden, wobei die untere magnetische Schicht (11) einen ersten Teil anschließend an das in Verwendung befindliche magnetische Aufzeichnungsmedium mit einer Dicke zwischen 0,1 µm und 1 µm und einer Breite in der Richtung senkrecht zu dem magnetischen Aufzeichnungsmedium zwischen 2 µm und 5µm und einen zweiten Teil mit einer Dicke zwischen 1 µm und 6 µm hat.

2. Kopf nach Anspruch 1, wobei der Winkel zwischen einer Oberfläche des Substrats (10), die einem magnetischen Aufzeichnungsmedium bei Verwendung gegenübersteht, und der Oberfläche des Substrats, die die untere magnetische Schicht (11) trägt, kleiner als 90° ist.

3. Kopf nach einem der vorhergehenden Ansprüche, wobei die obere magnetische Schicht (15) eine Dicke zwischen 5 µm und 40 µm hat.

4. Dünnfilm-Senkrechtmagnetkopf für Aufzeichnung und Wiedergabe nach einem der vorhergehenden Ansprüche, wobei zumindest ein Teil der unteren magnetischen Schicht (11) entweder aus einer magnetischen Legierung, die Fe und Si als ihre Tauptbestandteile enthält, oder aus einer Legierung besteht, die Fe und Ti als ihre Hauptbestandteile enthält.

5. Kopf nach einem der vorhergehenden Ansprüche, wobei zumindest ein Teil der oberen magnetischen Schicht eine amorphe magnetische Legierung ist.

6. Kopf nach einem der vorhergehenden Ansprüche, wobei die zweite Isolierschicht aus einem anorganischen Isolator hergestellt ist.

7. Kopf nach einem der Ansprüche 1 bis 5, wobei die zweite Isolierschicht aus einem organischen Isolator hergestellt ist.

8. Kopf nach Anspruch 7, wobei der organische Isolator ein Polyimidharz ist.

**Revendications**

1. Tête magnétique d'enregistrement et de reproduction à films minces possédant un substrat non magnétique (10), une couche magnétique inférieure (11) sur le substrat (10), une première couche d'isolement (12) sur la couche magnétique inférieure (11), une seconde couche d'isolement (14) sur la première couche d'isolement (12), et une couche magnétique supérieure (15), une première partie de la couche magnétique supérieure étant réalisée sur la seconde couche d'isolement (14), une seconde partie de la couche magnétique supérieure (15) étant en contact avec la première couche d'isolement (12), et une troisième partie de la couche magnétique supérieure (15) étant en contact avec la couche magnétique inférieure (11), au moins un conducteur (13) étant encapsulé à l'intérieur des première et/ou seconde couches d'isolement (12, 14); caractérisée en ce que:

la couche magnétique inférieure (11) est agencée pour constituer un pôle magnétique principal, et la couche magnétique supérieure (15) est agencée pour constituer un pôle magnétique auxiliaire, la couche magnétique inférieure (11) ayant une première partie adjacente au support d'enregistrement magnétique en utilisation, avec une épaisseur comprise entre 0,1 µm et 1 µm et une largeur dans la direction perpendiculaire au support d'enregistrement magnétique comprise entre 2µm et 5 µm, et une seconde partie avec une épaisseur comprise entre 1 µm et 6µm.

2. Tête selon la revendication 1, dans laquelle l'angle entre une surface du substrat (10) qui, en utilisation, fait face à un support d'enregistrement magnétique et la surface du substrat portant la couche magnétique inférieure (11) est inférieur à 90°.

3. Tête selon l'une quelconque des revendications précédentes, dans laquelle la couche magnétique supérieure (15) possède une épaisseur comprise entre 5µm et 40 µm.

4. Tête magnétique perpendiculaire d'enregistrement et de reproduction à films minces selon l'une quelconque des revendications précédentes, dans laquelle au moins une partie de la couche magnétique inférieure (11) est soit en un alliage magnétique contenant Fe et Si en tant que constituants principaux, soit un alliage contenant Fe et Ti en tant que constituants principaux.

5. Tête selon l'une quelconque des revendications précédentes, dans laquelle au moins une partie de la couche magnétique supérieure est un alliage magnétique amorphe.

6. Tête selon l'une quelconque des revendications précédentes, dans laquelle la seconde couche d'isolement est constituée d'un isolant inorganique.

7. Tête selon l'une quelconque des revendications 1 à 5, dans laquelle la seconde couche d'isolement est constituée d'un isolant organique.

8. Tête selon la revendication 7, dans laquelle l'isolant organique est une résine du type polyimide.

# FIG. 1

# FIG. 2

*FIG. 3*